# EUROPEAN PATENT APPLICATION

(11) **EP 2 378 280 A1**
(43) Date of publication of application: **19.10.2011**
(21) Application number: 09834832.9
(22) Date of filing: 21.12.2009
(51) Int. Cl.: G01N 23/04, H05G 1/00

(54) **X-RAY INSPECTION METHOD AND X-RAY INSPECTION APPARATUS**

(30) Priority: 22.12.2008 JP 2008326252
(71) Applicant: Omron Corporation, Kyoto-shi, Kyoto 600-8530 (JP)
(72) Inventor: SUGITA, Shinji, Kyoto-shi Kyoto 600-8530 (JP); MASUDA, Masayuki, Kyoto-shi Kyoto 600-8530 (JP)
(74) Representative: Wilhelms · Kilian & Partner Patentanwälte
(86) International application number: PCT/JP2009/071244
(87) International publication number: WO 2010/074031

(57) **Abstract**

An X-ray inspection apparatus (100) includes an X-ray source (10), an X-ray detector (23), an image acquisition control mechanism (30) for controlling acquisition of image data from the X-ray detector (23), an inspection object drive mechanism (20) for moving an inspection object (1), an X-ray source control mechanism (60), and an operation unit (70). The X-ray source control mechanism (60) causes the X-ray source (10) to output X-rays from focal point positions aligned in the X direction, based on an instruction from the operation unit (70). The inspection object (1) is divided into a plurality of partial areas. The image acquisition control mechanism (30) acquires a partial image which is an image of an X-ray output from each focal point position and transmitted through each partial area. When acquisition of partial images for all the focal point positions is finished, the inspection object drive mechanism (20) moves the inspection object (1) in the Y direction based on an instruction from the operation unit (70).

## Description

### TECHNICAL FIELD

The present invention relates to an X-ray inspection method and an X-ray inspection apparatus. More specifically, the present invention relates to an image Pickup method for inspecting an object by using X-ray irradiation, which is a technique applicable to an X-ray inspection method and an X-ray inspection apparatus.

### BACKGROUND ART

In recent years, LSI (Large-Scale Integration) of higher degree of integration has been developed thanks to microfabrication technique of sub-microns, allowing functions which have conventionally been divided into a plurality of packages to be packed in one LSI. Since conventional QFPs (Quad Flat Packages) and PGAs (Pin Grid Arrays) can no longer accommodate the increased number of pins resulting from incorporating necessary functions in one package, LSIs of BGAs (Ball Grid Arrays) and CSPs (Chip Size Packages) in particular have been used these days, For applications that need to be microminiaturized such as mobile telephones, a BGA package is used even if the number of required pins is not so large.

While BGA and CSP packages of LSI greatly contribute to microminiaturization, soldered portions and the like are not visible from the appearance after being assembled. For this reason, when a printed board and the like having BGA and CSP packages mounted thereon is inspected, a fluoroscopic image obtained by irradiating an inspection object with an X-ray is analyzed, to determine whether or not quality is acceptable. For determining whether or not quality is acceptable, X-ray CT (Computed Tomography) that reconstructs three-dimensional data of an object from fluoroscopic images picked up from a plurality of directions is widely used.

Patent Document 1 (Japanese Patent Laying-Open No. 2007-127668) discloses a method of successively moving a substrate which is an inspection object in X and Y directions using a monofocal X-ray source, thereby picking up images of the substrate from a plurality of directions. Fig. 32 shows a trajectory of a substrate in the case of adopting the method of Patent Document 1.

Patent Document 2 (Japanese Patent Laying-Open No. 2006-177760) discloses a method of picking up images of a substrate using a plurality of detectors arranged discretely. Since images are picked up by a plurality of detectors, the number of movements of the substrate can be reduced.

### PRIOR ART DOCUMENTS

### PATENT DOCUMENTS

Patent Document 1: Japanese Patent Laying-Open No 2007-127668
Patent Document 2: Japanese Patent Laying-Open No. 2006-177760

### SUMMARY OF THE INVENTION

### PROBLEMS TO BE SOLVED BY THE INVENTION

It is difficult to perform CT reconstruction at high speed by the conventional methods.

In the method disclosed in Patent Document 1, the direction in which images can be picked up and the number of picked up images are determined by the manner in which a detector area is divided, and cannot be changed. Patent Document 1 shows an example of obtaining nine images for each area of interest.

In the method disclosed in Patent Document 2, the direction in which images can be picked up and the number of picked up images are determined by the arrangement of detectors.

Further, in either method of Patent Documents 1 and 2, the number of movements of the substrate Will be enormous when picking up images of many fields of view (a range of an inspection object whose image can be picked up by one detector) Therefore, image acquisition takes time due to time for moving the substrate.

The present invention was made to solve the above-described problems, and has an object to provide an X-ray inspection method and an X-ray inspection apparatus that can perform CT reconstruction at high speed.

### MEANS FOR SOLVING THE PROBLEMS

According to an aspect of the present invention, provided is an X-ray inspection method for detecting X-rays output from an X-ray source and transmitted through an inspection object area of an object by an X-ray detection unit, to reconstruct three-dimensional data of the inspection object area from images indicated by the X-rays as detected. The X-ray inspection method includes the steps of acquiring a partial image for each of a plurality of partial areas obtained by dividing the inspection object area in a first direction based on a result of detection of the X-rays output from an X-ray focal point position by the X-ray source and transmitted through the plurality of partial areas, respectively, repeating the step of acquiring the partial image while scanning the X-ray focal point position of the X-ray source in the first direction, and reconstructing the three-dimensional data from the partial image at each of a plurality of the X-ray focal point positions acquired by scanning of the X-ray focal point position.

Preferably, the inspection object area is divided into a plurality of the partial areas in the first direction and in a second direction extending across the first direction, and the step of repeating includes the step of repeating the step of acquiring the partial image while moving the inspection object in the second direction after scanning the X-ray focal point position of the X-ray source in the first direction, and scanning the X-ray focal point position of the X₋ray source in the first direction starting from a state in which the inspection object has been moved in the second direction.

Preferably, in the step of repeating, the X-ray focal point position is scanned on a plurality of lines.

More preferably, the X-ray source includes a plurality of targets arranged on the plurality of lines, respectively, and in the step of repeating, the X-ray focal point position is scanned on each of the targets.

Still more preferably, the X-ray detection unit is arranged to be interposed between two of the targets in a direction extending across the lines.

Further preferably, each of the targets is a reflective target.

According to another aspect of the present Invention, an X₋ray inspection apparatus for reconstructing three-dimensional data of an inspection object area of an object. The X-ray inspection apparatus includes an X-ray source for outputting X-rays, an X-ray detection unit for detecting the X-rays and outputting images indicated by the X-rays as detected, and a control unit for controlling operation of the X-ray inspection apparatus. The control unit includes an image acquisition unit for acquiring a partial image for each of a plurality of partial areas obtained by dividing the inspection object area in a first direction from a result of detection of X-rays output, from an X-ray focal point position of the X-ray source and transmitted through the plurality of partial areas, respectively, an X-ray source control unit for causing the X-ray source to scan the X-ray focal point position in the first direction, and a reconstruction unit for, along with scanning of the X-ray focal point position by the X-ray source control unit, reconstructing the three-dimensional data from the partial image acquired by the image acquisition unit at each of a plurality of the X-ray focal point positions.

### EFFECTS OF THE INVENTION

According to the present invention, three-dimensional data of an inspection object area is reconstructed by scanning an X-ray focal point position, and using images of portions corresponding to X-rays output from the respective focal point positions and transmitted through the inspection object area, among images picked up by an X-ray inspection apparatus. Therefore, according to the present invention, X-ray fluoroscopic images of an inspection object from a plurality of directions necessary for CT reconstruction can be acquired at high speed. Therefore, according to the present invention, CT reconstruction can be performed at high speed.

### BRIEF DESCRIPTION OF THE DRAWINGS

Fig, 1 is a schematic block diagram of an X-ray inspection apparatus according to a first embodiment.
Fig. 2 illustrates a structure of the X-ray inspection apparatus according to the first embodiment.
Fig. 3 is a cross-sectional view of an X-ray source.
Fig. 4 is a front view of an X-ray detector, an inspection object, and an X-ray focal point position as seen from the Y direction.
Fig. 5 is a top view of the X-ray detector, the inspection object, and the X-ray focal point position as seen from the Z direction.
Fig. 6 is a side view of the X-ray detector, the inspection object, and the X-ray focal point position as seen from the X direction
Fig. 7 is a perspective view of the inspection object.
Fig. 8 illustrates X-rays transmitted through partial areas.
Fig. 9 shows a partial image acquired for a focal point position F1.
Fig. 10 shows partial images acquired for a focal point position F3.
Fig. 11 shows partial images acquired for a focal point position F6.
Fig. 12 illustrates movements of the inspection object.
Fig. 13 shows incident directions of X-rays incident upon a partial area.
Fig. 14 is a flowchart of overall X-ray inspection according to the first embodiment.
Fig. 15 is a flowchart of the CT image pickup process illustrated in Fig. 14.
Fig. 16 illustrates a structure of an X-ray inspection apparatus according to a second embodiment.
Fig. 17 is a front view of X-ray detectors, the inspection object, and the X-ray focal point position as seen from the Y direction.
Fig. 18 is a top view of the X-ray detectors, the inspection object, and the X-ray focal point position as seen from the Z direction.
Fig. 19 is a side view of the X-ray detectors, the inspection object, and the X-ray focal point position as seen from the X direction.
Fig. 20 is a flowchart of a CT image pickup process according to the second embodiment.
Fig. 21 is a cross-sectional view of an X-ray source according to a third embodiment.
Fig. 22 is a top view of the X-ray source according to the third embodiment.
Fig. 23 is a front view of X-ray detectors, the inspection object, and the X-ray focal point position as seen from the Y direction.
Fig, 24 is a top view of the X-ray detectors, the inspection object, and the X-ray focal point position as seen from the Z direction.
Fig. 25 is a side view of the X-ray detectors, the inspection object, and the X-ray focal point position as seen from the X direction.
Fig. 26 is a flowchart of a CT image pickup process according to the third embodiment.
Fig. 27 illustrates a position of X-ray detectors in the X-Y plane.
Fig. 28 illustrates a position of the X-ray detectors in the Y-Z plane.
Fig. 29 is a first diagram illustrating an X-ray inspection technique according to a fourth embodiment.
Fig. 30 is a second diagram illustrating the X-ray inspection technique according to the fourth embodiment.
Fig. 31 is a third diagram illustrating the X-ray inspection technique according to the fourth embodiment.
Fig. 32 shows a trajectory of a substrate in the case of adopting the method of Patent Document 1.

### MODES FOR CARRYING OUT THE INVENTION

Embodiments of the present invention will be described below with reference to the drawings. In the following description, the same components are denoted by the same reference characters. Their names and functions are also the same, Therefore detailed description thereof will not be repeated.

### [First Embodiment]

### (1. Structure Overview)

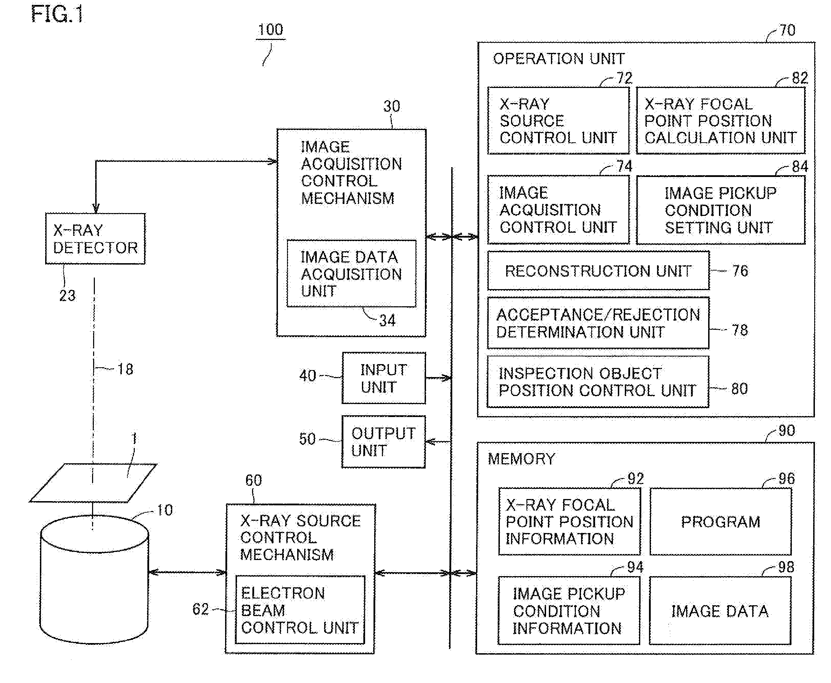

Referring to Fig. 1, the structure of an X-ray inspection apparatus 100 according to a first embodiment will be described. Fig. 1 is a schematic block diagram of X-ray inspection apparatus 100 according to the first embodiment.

X₋ray inspection apparatus 100 includes an X-ray source 10 outputting an X-ray 18, an X-ray detector 23, and an image acquisition control mechanism 30 X-ray inspection apparatus 100 further includes an input unit 40, an output unit 50, an X-ray source control mechanism 60, an operation unit 70, and a memory 90.

An inspection object 1 is arranged between X-ray source 10 and X-ray detector 23. In the present embodiment, inspection object 1 shall be a circuit board having components mounted thereon. It is noted that, although X-ray source 10, inspection object 1, and X-ray detector 23 are arranged in ascending order from the bottom in Fig. 1, X-ray detector 23, inspection object 1, and X-ray source 10 may be arranged in ascending order from the bottom in terms of maintainability of the X-ray source,

X-ray source 10 is controlled by X-ray source control mechanism 60, and irradiates inspection object 1 with X-ray 18. In the present embodiment, inspection object 1 shall be a circuit board having components mounted thereon.

Inspection object 1 is moved by an inspection object drive mechanism 20 (not shown in Fig. 1) Inspection object drive mechanism 20 can be implemented by, for example, an X-Y-Z stage or a pair of rails holding inspection object 1 therebetween.

X-ray detector 23 is a two-dimensional X-ray detector for detecting an X-ray output from X-ray source 10 and transmitted through inspection object 1, and forming an images. X-ray detector 23 can be implemented by an 1.1. (Image Intensifier) tube or an FPD (flat panel detector). In terms of installation space, X-ray detector 23 is desirably implemented by an FPD, Further, X-ray detector 23 desirably has high sensitivity so that it can be used for in-line inspection, and particularly desirably is a direct conversion FPD using CdTe.

Image acquisition control mechanism 30 includes an image data acquisition unit 34. Image data acquisition unit 34 acquires image data of X-ray detector 23 designated by operation unit 70.

Input unit 40 is an operation input device for receiving instruction input from a user and the like. Output unit 50 is a device for outputting a measurement result and the like to the outside. In the present embodiment, output unit 50 is a display for displaying an X-ray image and the like formed by operation unit 70.

Namely, the user can input various items through input unit 40, and various operation results obtained by processing of operation unit 70 are displayed on output unit 50. An image displayed on output unit 50 may be output for visual acceptance/rejection determination by the user, or may be output as a result of acceptance/rejection determination made by an acceptance/rejection determination unit 78 to be described later.

X-ray source control mechanism 60 includes an electron beam control unit 62 controlling output of an electron beam. Electron beam control unit 62 receives designation of an X-ray focal point position, and X-ray energy (tube voltage, tube current) from operation unit 70. The X-ray energy designated varies with a structure of an inspection object.

Operation unit 70 executes a program 96 stored in memory 90 to control each unit, and performs predetermined operation processing. Operation unit 70 includes an X₋ray source control unit 72, an image acquisition control unit 74, a reconstruction unit 76, an acceptance/rejection determination unit 78, an inspection object position control unit 80, an X-ray focal point position calculation unit 82, and an image pickup condition setting unit 84.

X-ray source control unit 72 determines an X-ray focal point position and X-ray energy, and transmits a command to X-ray source control mechanism 60.

Image acquisition control unit 74 transmits a command to image acquisition control mechanism 30 such that X-ray detector 23 acquires an image. Image acquisition control unit 74 acquires image data from image acquisition control mechanism 30.

Reconstruction unit 76 reconstructs three-dimensional data from a plurality of pieces of image data acquired by image acquisition control unit 74.

Acceptance/rejection determination unit 78 determines whether or not an inspection object is acceptable based on three-dimensional data reconstructed by reconstruction unit 76, or fluoroscopic data. For example, acceptance/rejection determination unit 78 recognizes a shape of a solder ball, and determines whether or not the ball is acceptable by determining whether or not the recognized shape is within a predetermined tolerable range. Since an algorithm for the acceptance/rejection determination, or input information to the algorithm varies with an inspection object, acceptance/rejection determination unit 78 obtains them from image pickup condition information 94.

Inspection object position control unit 80 controls inspection object drive mechanism 20.

X-ray focal point position calculation unit 82 calculates an X-ray focal point position, an irradiation angle and the like for an inspection area of inspection object 1, when inspecting the inspection area.

Image pickup condition setting unit 84 sets conditions for outputting an X-ray from X-ray source 10 (e.g., a voltage applied to the X-ray source, image pickup time, etc.), depending on inspection object 1.

Memory 90 includes X-ray focal point position information 92, image pickup condition information 94, program 96 for realizing the respective functions performed by operation unit 70 described above, and image data 98 picked up by X-ray detector 23. X-ray focal point position information 92 contains the X-ray focal point position calculated by X-ray focal point position calculation unit 82. Image pickup condition information 94 contains the image pickup conditions set by image pickup condition setting unit 84 and information about the algorithm for acceptance/rejection determination.

Memory 90 is only required to accumulate data. Memory 90 is formed of a storage device such as a RAM (Random Access Memory), an EEPROM (Electrically Erasable and Programmable Read-Only Memory), or an HDD (Hard Disc Drive), for example.

### (Specific Structure)

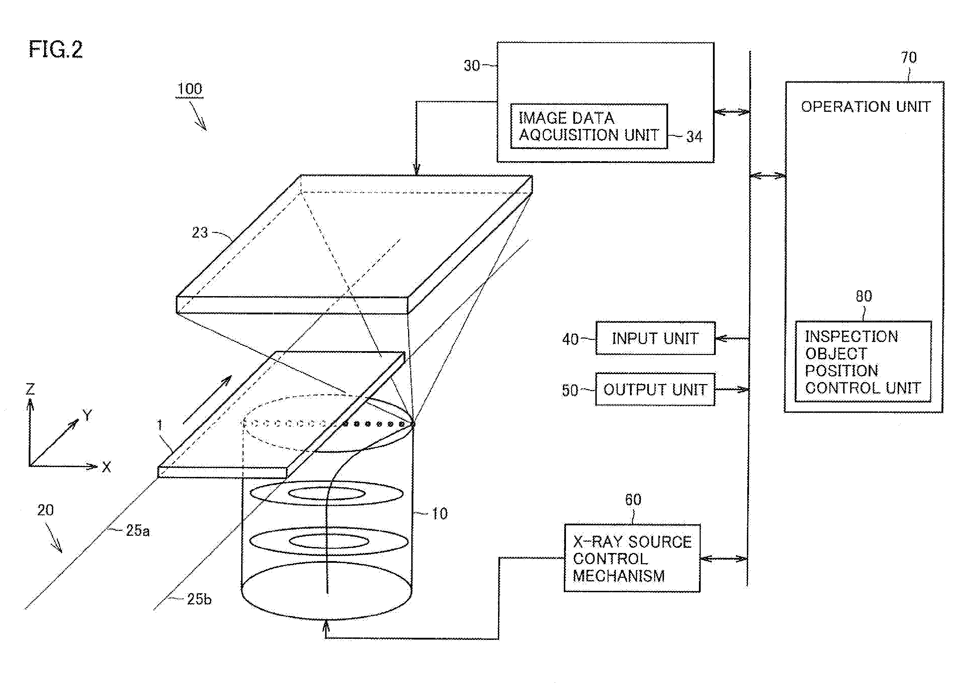

A specific structure of X-ray inspection apparatus 100 according to the first embodiment will now be described with reference to Fig. 2. Fig 2 illustrates the structure of X-ray inspection apparatus 100 according to the first embodiment. It is noted that in Fig. 2, the same parts as those in Fig. 1 are denoted by the same reference characters. In addition, Fig. 2 illustrates portions necessary for description directly related to control of an X-ray focal point position, control of an X-ray detector position, control of an inspection object position, and the like, extracted from the portions shown in Fig. 1.

In the present embodiment, X-ray source 10 is a scanning X-ray source capable of scanning a position where an X-ray is generated (X-ray focal point position) in one direction. X-ray source 10 generates an X-ray in accordance with an instruction from operation unit 70 through scanning X-ray source control mechanism 60.

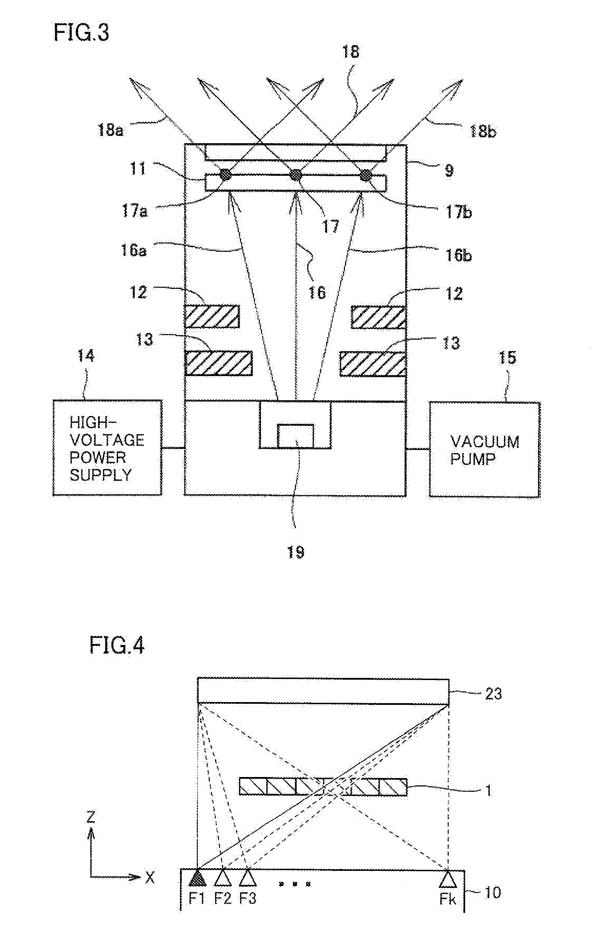

The structure of X-ray source 10 will now be described with reference to Fig. 3. Fig. 3 is a cross sectional view of X-ray source 10.

Referring to Fig. 3, in X-ray source 10, an electron gun 19 controlled by electron beam control unit 62 irradiates a target 11 such as tungsten with an electron beam 16. X-ray 18 is then generated from a position where electron beam 16 impinged on the target (X-ray focal point position 17), and is emitted (output). As can be seen from Fig. 3, X-ray source 10 is a transmissive X-ray source that outputs an X-ray in the direction that an electron beam is transmitted.

It is noted that an electron beam system is housed in a vacuum container 9. Inside of vacuum container 9 is kept evacuated by a vacuum pump 15, and electron beam 16 accelerated by a high-voltage power supply 14 is emitted from electron gun 19.

X-ray source 10 converges electron beam 16 by an electron beam convergence coil 13, and then deflects electron beam 16 by a deflection yoke 12, so that a position where electron beam 16 impinges on target 11 can be changed. For example, an electron beam 16a deflected by deflection yoke 12 impinges on target 11, and an X-ray 18a is output from an X-ray focal point position 1.7a. Similarly, an electron beam 16b deflected by deflection yoke 12 impinges on target 11, and an X-ray 18b is output from an X-ray focal point position 17b.

Target I l may be a linear target or a continuous surface target. When including a continuous surface target, X-ray source 10 can freely set X-ray focal point position 17 within the range of target. When this X-ray source 10 is adopted in this image pickup method, X-ray focal point position 17 only needs to be limited to one direction. In addition, although X-ray source 10 shown in Fig. 3 is of a transmissive type, X-ray source 10 may be of a reflective type.

It is noted that, to move the X-ray focal point position, the position of the X-ray source itself can be mechanically moved each time, for example. However, the use of the scanning X-ray source can achieve an X-ray inspection apparatus having high maintainability and reliability, without the need to move X-ray source 10 mechanically when moving the X-ray focal point position if the movement is within a certain range. Moreover, time required for X-ray scanning using the scanning X-ray source is only about 100 times less than that of mechanical scanning (scanning time by the radiation source is several milliseconds, while mechanical movement requires several hundreds of milliseconds). Therefore, the scanning X-ray source is adopted in the present embodiment. It is noted that the X-ray source may be implemented by another type of radiation source that can change an X-ray generated position instantaneously on an X-ray emission plane, such as a multifocal X-ray source.

Referring back to Fig. 2, inspection object drive mechanism 20 includes an actuator and a mechanism for fixing the inspection object. Inspection object drive mechanism 20 is capable of moving a field of view of the inspection object in the X and Y directions by an inspection object position drive mechanism controlled by inspection object position control unit 80 in operation unit 70, independently of X-ray detector 23.1 or 23.2 described above.

For in-line inspection, inspection object drive mechanism 20 basically moves inspection object 1 in the Y direction. More specifically, inspection object drive mechanism 20 moves inspection object 1 yet to be inspected from the -Y (or +Y) direction to the +Y direction for transfer into a range of X-ray irradiation. Inspection object drive mechanism 20 moves inspection object 1 having been inspected further to the +Y direction

Inspection object drive mechanism 20 is preferably implemented by a device that does not interfere with an X-ray. In the present embodiment, inspection object drive mechanism 20 is implemented by rails 25a and 25b that hold inspection object 1 therebetween at its opposite sides.

Operation unit 70 transmits instructions to a detector driving control unit 32, image data acquisition unit 34, and scanning X-ray source control mechanism 60, and executes a program illustrated in a flowchart for inspection processing to be described later.

Particularly, operation unit 70 acquires an X-ray fluoroscopic image and transfers picked up image data at timing instructed by an instruction through detector driving control unit 32. Operation unit 70 can control operation of the inspection apparatus by using input from input unit 40, and output a status of each unit or an inspection result from output unit 50.

### (Image Pickup Technique)

A technique for picking up an X-ray fluoroscopic image by using X-ray inspection apparatus 100 will now be described.

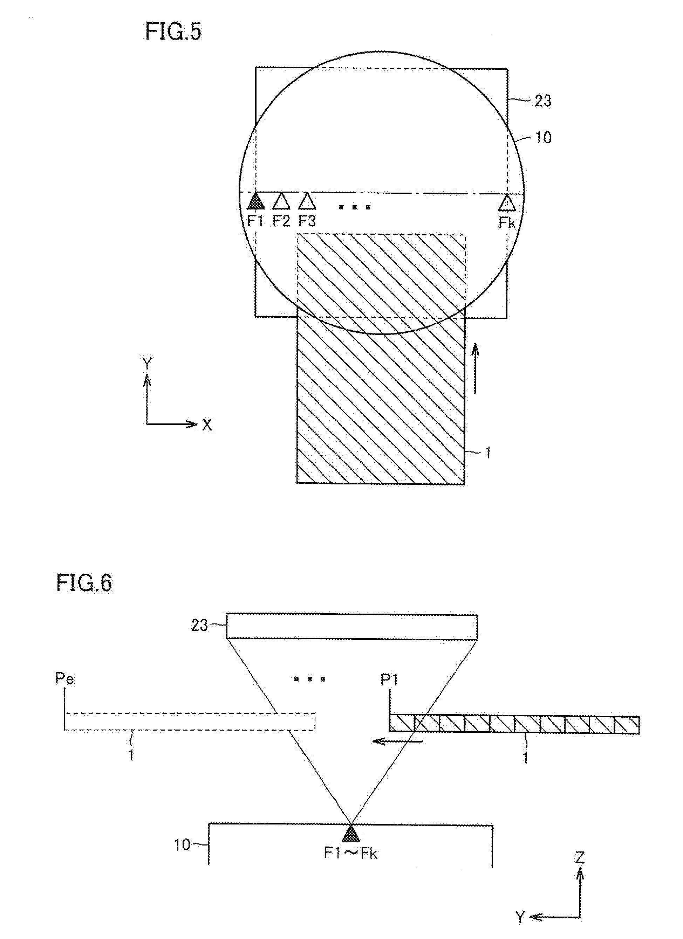

First, positional relation among X-ray detector 23, inspection object 1, and X-ray focal point position 17 will be described with reference to Figs. 4 to 6. Fig. 4 is a front view of X-ray detector 23, inspection object 1, and X-ray focal point position 17 as seen from the Y direction. Fig. 5 is a top view of X-ray detector 23, inspection object 1, and X-ray focal point position 17 as seen from the Z direction. Fig. 6 is a side view of X-ray detector 23, inspection object 1, and X-ray focal point position 17 as seen from the X direction.

Figs. 4 to 6 each show a position of X-ray detector 23. However, since a portion that relates to X-ray detection is a sensitive area (light receiving unit) of X-ray detector 23, consideration may be made with X-ray detector 23 shown in each drawing replaced by a light receiving unit. With reference to Fig. 5, X-ray detector 23 has a light receiving unit of a square or a similar aspect ratio thereto,

Referring to Fig. 4, X-ray detector 23 shall be sized such that transmission images can be acquired at required angles for the opposite ends of the inspection object area in the X direction. It is noted that herein the whole surface of inspection object 1 is an inspection object area. For oblique CT, the length of X-ray detector 23 in the X direction needs to be longer than the length of inspection object 1 in the X direction.

Also Referring to Fig. 4, X-ray source 10 has an X-ray emission area capable of irradiating the opposite ends of the inspection object area in the X direction at required angles, without moving the inspection object area in the X direction. X-ray source 10 successively emits X-rays in the Z direction at plurality of focal point position (in the drawing, Fl to Fk) different from each other aligned on a line in the X direction. X-ray detector 23 acquires a transmission image per irradiation.

Referring to Fig. 5 or 6, X-ray inspection apparatus 100 performs X-ray emission and image pickup at each of focal point positions Fl to Fk, and then moves inspection object 1 in the Y direction from a position P1 to P2 to perform emission and image pickup at Fl to Fk. X-ray inspection apparatus 100 similarly repeats X-ray emission and movement of inspection object 1. When irradiation of inspection object 1 and image pickup end at a position Pe in Fig. 6, CT image pickup ends. When inspection object 1 is at position Pe, an X-ray transmitted through the lower end of the inspection object area in the Y direction enters X-ray detector 23.

X-ray inspection apparatus 100 divides the inspection object area into a plurality of areas (partial areas), and manages picked up images. Specifically, X-ray inspection apparatus 100 acquires images (referred to as partial images) corresponding to the respective partial areas among picked up images, and reconstructs three-dimensional data of the partial areas from the partial images. Hereinafter, this will be described.

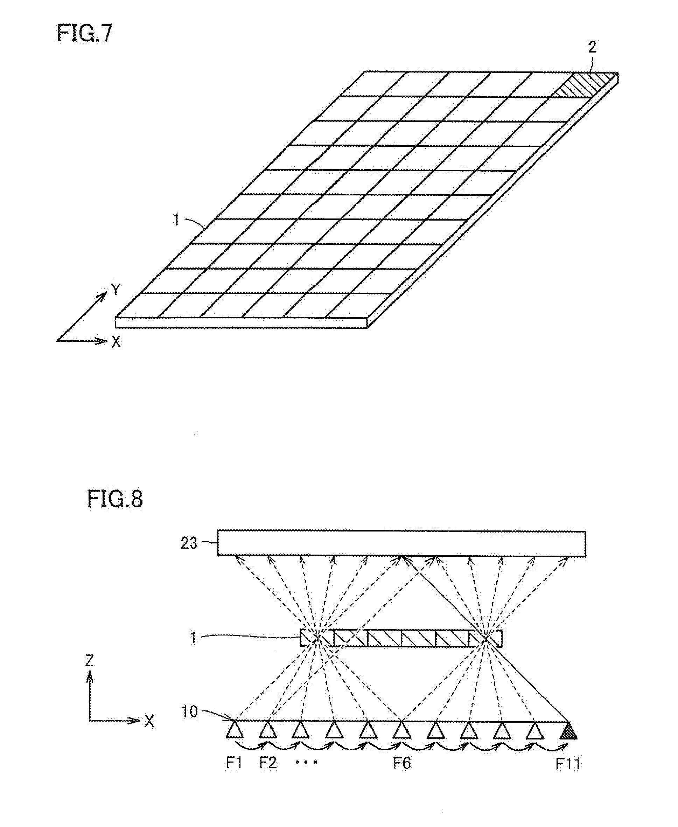

Fig. 7 is a perspective view of inspection object 1. Inspection object 1 is divided in the X and Y directions. Herein, images of inspection object 1 shall be picked up from six directions in each of the X and Y directions, hence, thirty-six directions. For this purpose, it is desirable to divide inspection object 1 equally into six in the X direction for handling as shown in Fig. 7 for X-ray irradiation from six directions in the X direction. In the Y direction, inspection object 1 is divided to have a length equal to that obtained by division in the X direction. As a result, in the example shown in Fig. 7, inspection object 1 is divided into six in the X direction and ten in the Y direction.

Fig. 8 illustrates X-rays transmitted through partial areas. In Fig. 8, the structure is seen from the X-Z plane X-ray inspection apparatus 100 performs image pickup at focal points F1 to F11 to acquire an X-ray transmission image for each focal point.

An X-ray from focal point position F1 enters the leftmost partial area of inspection object 1, and enters X-ray detector 23. The dotted line from focal point position F1 indicates the X-ray output rightward at the maximum angle. It is noted that, although an X-ray is also output leftward from focal point position F1, this X-ray is not illustrated in Fig. 8.

For focal point position F2, X-ray detector 23 can acquire transmission images for the leftmost partial area and its neighboring partial area. For focal point positions F3 to F11, transmission images for one or more partial areas can also be acquired.

As a result, X-rays output from focal point positions F1 to F6 are transmitted through the leftmost partial area of inspection object 1, and the transmitted X-rays enter X-ray detector 23. X-rays output from focal point positions F6 to F11 are transmitted through the rightmost partial area of inspection object 1, and the transmitted X-rays enter X-ray detector 23. Similarly, X-rays output from six focal point positions are transmitted through every partial area, and the transmitted X-rays enter X-ray detector 23. Therefore, by image pickup at F1 to F11, image pickup for six fields of view from six directions will be completed.

It is noted that the distance spacing in the X direction at which an X-ray is emitted is desirably equal to the distance in the division step in the X direction shown in Fig. 7. However, the distance spacing is not always limited as such.

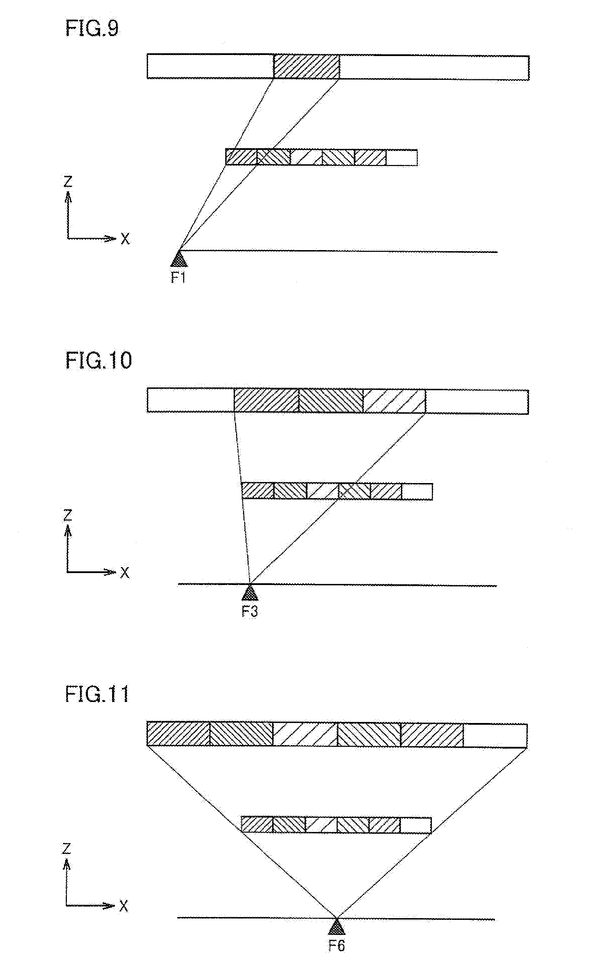

A partial image will now be described with reference to Figs. 9 to 11. Figs. 9 to 11 show partial images acquired for focal point position F1, F3, and F6, respectively.

Referring to Fig. 9, when an X-ray is output from focal point position F1, X-ray inspection apparatus 100 obtains a partial image for the leftmost partial area. In the drawing, the partial area of inspection object 1 and the position on X-ray detector 23 where the partial area is projected are indicated by the same hatching.

Specifically, image acquisition control unit 74 output focal point position F1 based on the focal point positions, the position of inspection object 1, the size of partial areas, and the position of X-ray detector 23 to obtain an area in X-ray detector 23 where an X-ray transmitted through the leftmost partial area enters. Image acquisition control unit 74 sends a command to image acquisition control mechanism 30 such that X-ray detector 23 acquires an image of the obtained area. As a result, image acquisition control unit 74 stores the acquired image as a partial image in memory 90. Alternatively, image acquisition control unit 74 may extract an image in the obtained area as a partial image from images of the whole detector surface acquired by X-ray detector 23.

Similarly, Referring to Fig. 10, when an X-ray is output from focal point position F3, X-ray inspection apparatus 100 obtains partial images for three partial areas.

Referring to Fig. 11, when an X-ray is output from focal point position F6, X-ray inspection apparatus 100 obtains partial images for six partial areas.

Referring to Fig. 9 to 11, giving attention to one partial area, the position where that partial area is projected on X-ray detector 23 will be moved in the X direction along with the movement of the focal point position.

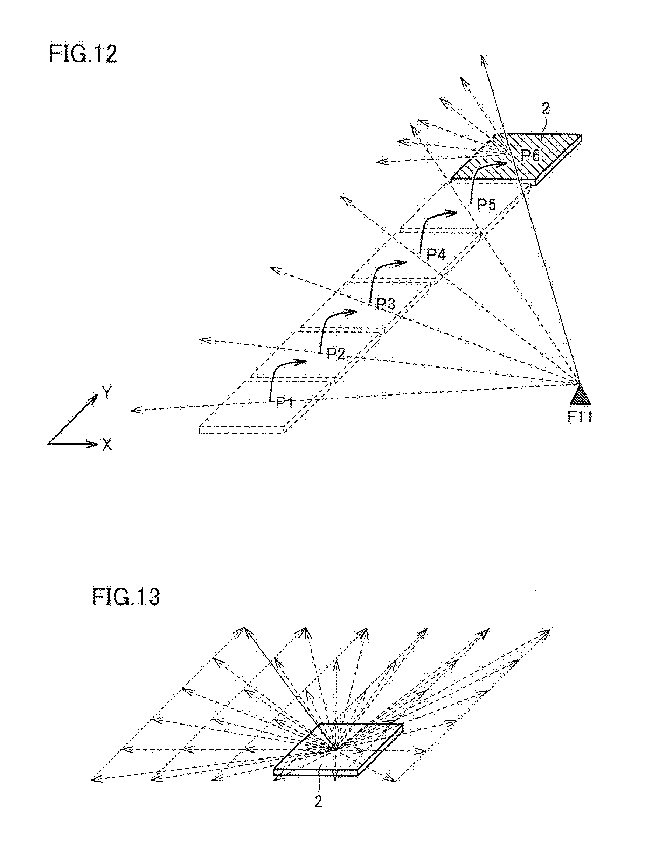

X-ray inspection apparatus 100 also picks up X-ray fluoroscopic images at different Y positions by moving inspection object 1 in the Y direction. Referring to Fig. 12, movements of inspection object 1 will be described. Fig. 12 illustrates movements of a partial area 2 shown in Fig. 7 (the leftmost martial area in Fig. 8).

By moving inspection object 1 in the Y direction, positional relation in the Y direction between partial area 2 and a focal point position (F 11 is particularly shown in Fig, 12) changes, so that the incident angle at which an X-ray output from focal point position F11 enters partial area 2 changes. In this case, since the position of partial area 2 is moved five times from positions P1 to P6, X-ray fluoroscopic images are picked up from six directions in the Y direction.

Image pickup is performed continuously from focal points F1 to F11 with each change of row. Therefore, at each of positions P1 to P6, partial area 2 is also irradiated with X-rays from focal points F6 to F10 at different angles, respectively. As a result, when image pickup at P6 is finished, image pickup from thirty-six directions will be completed, as shown in Fig. 13. Fig. 13 shows incident directions of X-rays that enter partial area 2.

While an image of partial area 2 is picked up at position P6, image pickup is performed concurrently in the subsequent rows, for example, in the closest row subsequent to partial area 2, image pickup at position P5 is performed, and in the second closest row, image pickup at position P4 is performed. Therefore, when movements in the Y direction and emission from F1 to F11 are repeated, and image pickup of the last row in the Y direction of the inspection object area is finished at position P6, then, image pickup for CT inspection will be completed for the whole area. The leading end of partial area 2 at this stage is located at position Pe shown in Fig. 6.

As described above, X-ray inspection apparatus 100 according to the present embodiment acquires a partial image for each of a plurality of partial areas 2 obtained by dividing the inspection object area of inspection object 1 in the X direction (first direction) from a detection result of X-rays output by X-ray source 10 from X-ray focal point position 17 and transmitted through the plurality of partial areas 2, respectively, By repeating this acquisition of a partial image while scanning X-ray focal point position 17 of X-ray source 10 in the X direction, partial images at a plurality of X-ray focal point positions 17 can be obtained, respectively,

Further, after scanning X-ray focal point position 17 of X-ray source 10 in the X direction, object 1 is moved in the Y direction (second direction), and a partial image at each focal point position 17 is successively acquired while scanning X-ray focal point position 17 of X-ray source 10 in the X direction starting from the state in which object 1 has been moved in the Y direction.

Then, three-dimensional data is reconstructed from the obtained partial images at respective X-ray focal point positions 17.

That is, X-ray inspection apparatus 100 according to the present embodiment achieves a plurality of irradiation angles in the X direction by scanning the focal point, and a plurality of irradiation angles in the Y direction by mechanical movements of the inspection, object. According to this technique, the inspection object only needs to be moved in one direction (in the Y direction in the above description) while images of the inspection object are picked up from many directions. Therefore, the number of movements of the inspection object can be reduced as compared to the conventional methods. X-ray inspection apparatus 100 can thereby reconstruct precise three-dimensional data for the whole inspection object at high speed.

Conventionally, three or more mechanical operation axes are general required to obtain image data necessary for CT, reconstruction. However, X-ray inspection apparatus 100 only requires a single mechanical operation axis, resulting in simple structure.

Further, if the moving distance of inspection object 1 for each step in the Y direction conforms to the width of each partial area set on inspection object 1 (which shall be the same value both in the X and Y directions), a computer storing picked up image data can be brought into a state in which "picked up image data of the whole substrate surface which is an inspection object from n×n direction have been stored" at the time when image pickup for CT inspection is completed for the whole area by repeating movements and image pickup. Thereafter, selection can be arbitrarily made whether to reconstruct picked up image data for a small partial range, or for the whole surface, or only for an area of interest.

### (Flow of Process)

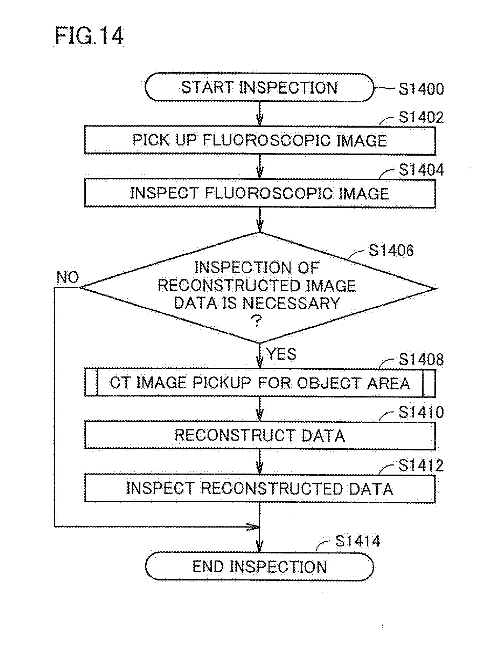

Fig. 14 is a flowchart of overall X-ray inspection according to the first embodiment. Referring two Fig. 14, the flow of overall X-ray inspection according to the first embodiment will now be described.

Referring to Fig. 14, when the process is started (step S1400), X-ray inspection apparatus 100 moves the inspection object area to a position where an image can be picked up to pick up a fluoroscopic image (step S1402). Generally, in X-ray inspection, an optical camera (not shown) is provided for specifying the position of inspection object 1 and, it is possible to determine the inspection object area based on images of the optical camera. Alternatively, the inspection object area may be automatically determined by X-ray inspection apparatus 100 basted on CAD data of inspection object 1, or may be determined based on the visual observation by the operator.

X-ray inspection apparatus 100 inspects the fluoroscopic image and determines whether or not afield of view (the scope picked up in the fluoroscopic image) of inspection object 1 is acceptable based on the acquire fluoroscopic image (step S1404). Since various methods for acceptance/rejection determination have been proposed and known, detailed description thereof will not be provided. For example, for the most basic inspection, determination is made by binarizing the fluoroscopic image with a constant value, comparing the binarized fluoroscopic image with design information such as CAD data, and determining whether or not a component exists at a predetermined position on the fluoroscopic image based on an area thereof

Thereafter, X-ray inspection apparatus 100 determines whether or not inspection by a reconstructed data image is necessary (step S406). A reference for determination may be set in advance based on design information such as the CAD data, or it may be determined based on the result of acceptance/rejection determination of fluoroscopic image. By way of example, in inspection of mounting boards, when components are mounted only on one side, it is possible to determine acceptance/rejection from the fluoroscopic image and, therefore, the acceptance/rejection determination using the reconstructed image may not be necessary.

If the inspection by the reconstructed data is unnecessary (NO at step S406), X-ray inspection apparatus 100 ends the inspection (step S1414).

If the inspection by the reconstructed image is necessary (YES at step S1406), X-ray inspection apparatus 100 performs CT image pickup for the inspection object area (step S1408). In the CT image pickup, X-ray inspection apparatus 100 picks up images of the inspection object area from a plurality of directions. Details of step S1408 will be described later.

Next, X-ray inspection apparatus 100 generates reconstructed data from the images picked up from a plurality of directions (step S1410). Various methods for reconstruction have been proposed and, by way of example, the Feldkamp method may be adopted.

Thereafter, X-ray inspection apparatus 100 determines acceptance/rejection based on the reconstructed data (step S1410). As the method for determining acceptance/rejection, a method directly using the three-dimensional data, a method using two-dimensional data (tomographic image), or a method using one-dimensional data (profile) may be possible. These methods for determining acceptance/rejection are well known, and the method for determining acceptance/rejection suitable for the item to be inspected may be used. Therefore, detailed description will not be repeated here. In the following, an example of acceptance/rejection determination will be described. First, the three-dimensional reconstructed image is binarized with a constant value. A position of a component (e.g., a solder ball of BGA) in the reconstructed image is specified based on design information such as CAD data. A volume of a pixel adjacent to the position of the component can be calculated based on the binarized image, to determine presence or absence of the component. X-ray inspection apparatus 100 thereby ends the inspection (step S1414).

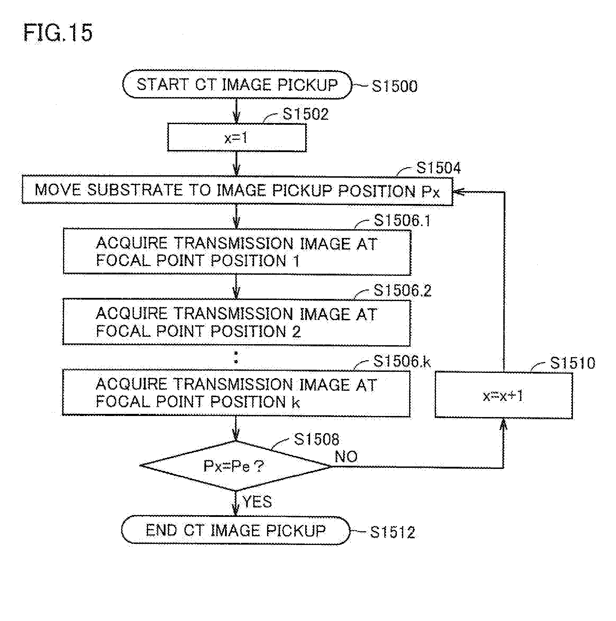

CT image pickup according to the first embodiment will now be described in detail with reference to Fig. 15. Fig. 15 is a flowchart of the CT image pickup process illustrated in Fig. 14.

Referring to Fig. 15, first, when the CT image pickup process is started (step S1500), operation unit 70 initializes a parameter for an image pickup position Px (set x=1) at step S1502.

At step S1504, operation unit 70 moves inspection object 1 to position Px for moving the inspection object area to be inspected to an appropriate position. The position of inspection object 1 may be set by using an encoder if mounted on inspection object drive mechanism 20. Alternatively, these positions may be set using a general detector (such as a laser displacement gauge).

Thereafter, operation unit 70 sets X-ray focal point position 17 at the respective focal point positions (F1 to Fk) to emit X-rays, and acquires transmission images (step S1506,1 to step S1506.k). The time of image pickup (detector exposure time) may be set in advance, or a desired time may be set by the user based on the visual observation. As already described, operation unit 70 acquires partial images corresponding to the respective partial areas in these processes. Operation unit 70 also transfers the partial images to memory 90, for example, for the reconstruction process by reconstruction unit 76.

Then, operation unit 70 determines whether or not Px=Pe holds (step S1508). For example, operation unit 70 performs this determination based on whether the number of movements of the substrate has reached a predetermined number. Alternatively, operation unit 70 may perform this determination based on a measurement result of substrate position by a position sensor.

When Px=Pe does not hold (NO at step S1508), operation unit 70 sets x=x+1 at step S1510, and then repeats the process from steps S1504. When Px=Pe holds (YES at step S1508), operation unit 70 ends the CT image pickup process (step S1512).

### (Others)

Although it has been described above that the inspection object area is divided into partial areas, it is not necessary to divide the inspection object area if the inspection object area has a size similar to that of a partial area. Alternatively, if the X-ray detector is large enough for an inspection object, it is not necessary to divide the inspection object area. However, considering that a large-size X-ray detector is expensive, a technique of dividing the inspection object into partial areas and reconstructing three-dimensional data of the respective partial areas as in the present embodiment is practical.

According to the above-described embodiment. X-ray focal point position 17 of X-ray source 10 is scanned in the first direction (in the X direction in the above-described example), and three-dimensional data of the inspection object area is reconstructed for the respective inspection object areas obtained by dividing the inspection object area into a plurality of partial areas in the first direction by using each partial image corresponding to an X-ray output from each X-ray focal point position 17 and transmitted through each partial area.

By adopting such structure, the range in which X-ray detector 23 must be present along the first direction can be made smaller, and X-ray transmission images of inspection object 1 from a plurality of directions necessary for CT reconstruction can be acquired at higher speed.

### [Second Embodiment]

### (Structure)

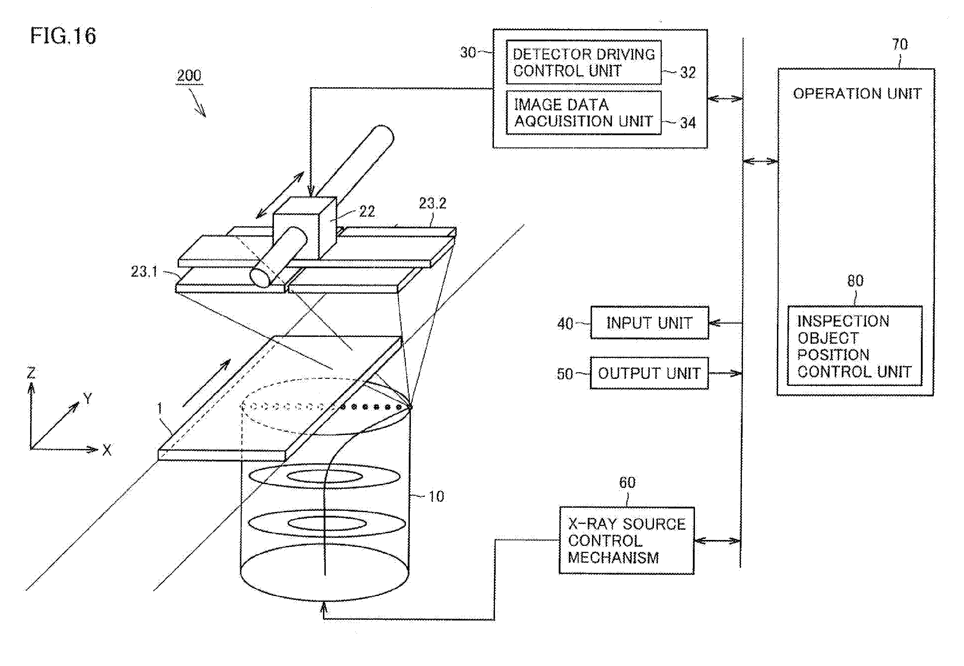

Referring to Fig. 16, a structure of an X-ray inspection apparatus 200 according to a second embodiment will now be described. Fig. 16 illustrates the structure of X-ray inspection apparatus 200 according to the second embodiment.

X-ray inspection apparatus 200 includes X-ray source 10, X-ray detectors 23.1 and 23.2, X-ray detector drive unit 22, image acquisition control mechanism 30, input unit 40, output unit 50, X-ray source control mechanism 60, operation unit 70, and memory 90. X-ray source control mechanism 60, operation unit 70, and memory 90 each have the structure as described with reference to Fig. 1.

Differences from the first embodiment lie in that X-ray detector drive unit 22 is provided, image acquisition control mechanism 30 includes detector driving control unit 32, and two X-ray detectors are provided.

A large-size X-ray detector is expensive, and image reading speed is low. To improve practicability, the second embodiment utilizes X-ray detector 23.1 and X-tray detector 23.2 of about one quarter of the size of X-ray detector 23 of the first embodiment.

X-ray detector 23.1 and X-ray detector 23.2 are aligned in the X direction. X-ray detector 23.1 and X-ray detector 23.2 are attached to X-ray detector drive unit 22. X-ray detector drive unit 22 operates based on an instruction from detector driving control unit 32, and moves X-ray detector 23.1 and X-ray detector 23.2 integrally in the Y direction.

In the present embodiment, the size of the detectors in the Y direction is smaller than that of the first embodiment. In the present embodiment, this is covered by that X-ray detector drive unit 22 moves the set of X-ray detectors integrally in the Y direction.

### (Image Pickup Technique)

A technique for picking up an X-ray fluoroscopic image by using X-tray inspection apparatus 200 will now be described.

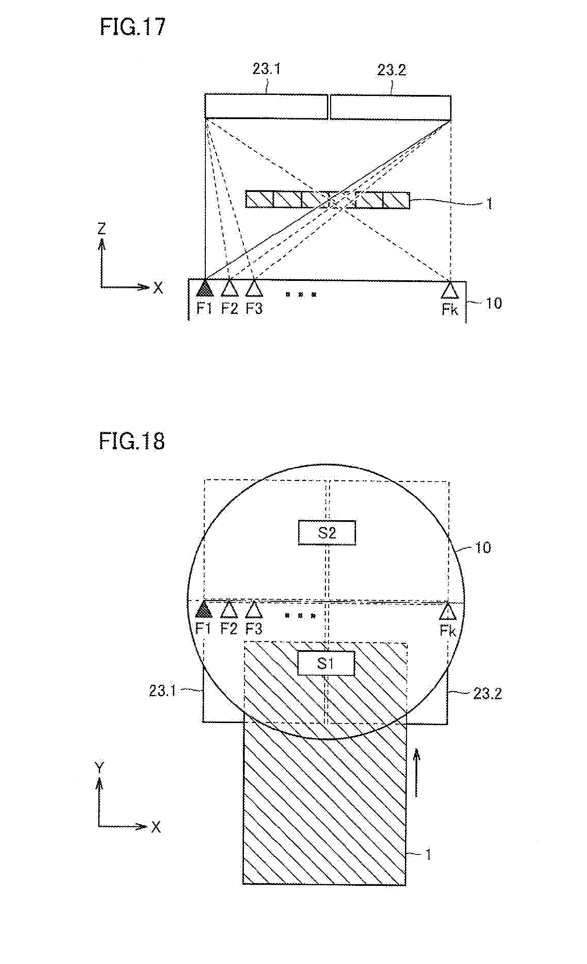

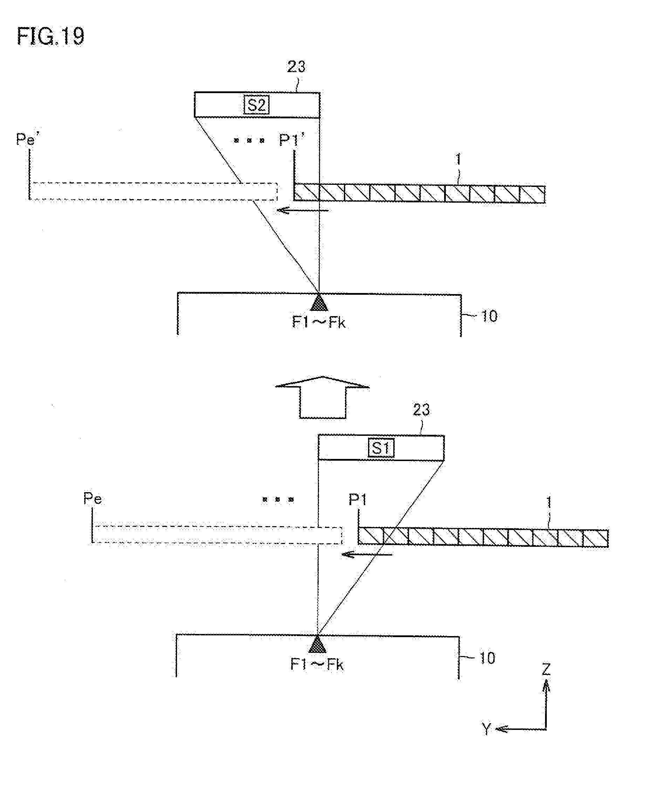

First, positional relation among X-ray detectors 23.1, 23.2, inspection object 1, and X-ray focal point position 17 will be described using Figs. 17 to 19. Fig. 17 is a front view of X-ray detectors 23.1, 23.2, inspection object 1, and X-ray focal point position 17 as seen from the Y direction. Fig. 18 is a top view of X-ray detectors 23.1, 23.2, inspection object 1, and X-ray focal point position 17 as seen from the Z direction. Fig. 19 is a side view of X-ray detectors 22.1, 23.2, inspection object 1, and X-ray focal point position 17 as seen from the X direction.

X-ray detectors 23.1 and 23.2 in Figs. 17 to 19 may be replaced by the light receiving units of X-ray detectors 23.1 and 23.2, respectively.

Referring to Fig. 17, X-ray detectors 23.1 and 23.2 are in close contact with each other in the X direction. Their total width in the X direction shall be sized such that transmission images can be acquired at required angles for the opposite ends of the inspection object area in the X direction. It is noted that the whole surface of inspection object 1 herein shall be an inspection object area. For oblique CT, the sum of the widths of X-ray detectors 23.1 and 23.2 in the X direction needs to be longer than the length of inspection object 1 in the X direction.

Similarly to the first embodiment, X-ray source 10 successively emits X-rays in the Z direction at a plurality of focal point positions (F1 to Fk in the drawing) different from one another on a line in the X direction. X-ray detectors 23.1 and 23.2 acquire transmission images per irradiation at a detector position S1 shown in Fig. 18.

Referring to the lower diagram of Fig. 19, X-ray inspection apparatus 200 performs X-ray emission and image pickup at each of focal point positions F1 to Fk, and then moves inspection object 1 in the Y direction from position P1 to P2 to perform emission and image pickup at F1 to Fk. X-ray inspection apparatus 200 similarly repeats X-ray emission and movement of inspection object 1. When irradiation of inspection object I and image pickup end at position Pe in Fig. 19, CT image pickup at detector position S1 ends. The process is similar to that of the first embodiment.

Then, X-ray inspection apparatus 200 moves the detector position to S2 and the substrate position to P1', as shown in the upper diagram of Fig. 19_{.} X-ray inspection apparatus 200 repeats emission at F1 to Fk and movement of the inspection object in the Y direction until image pickup of the last row in the Y direction of the inspection object ends at Pe',

### (Flow of Process)

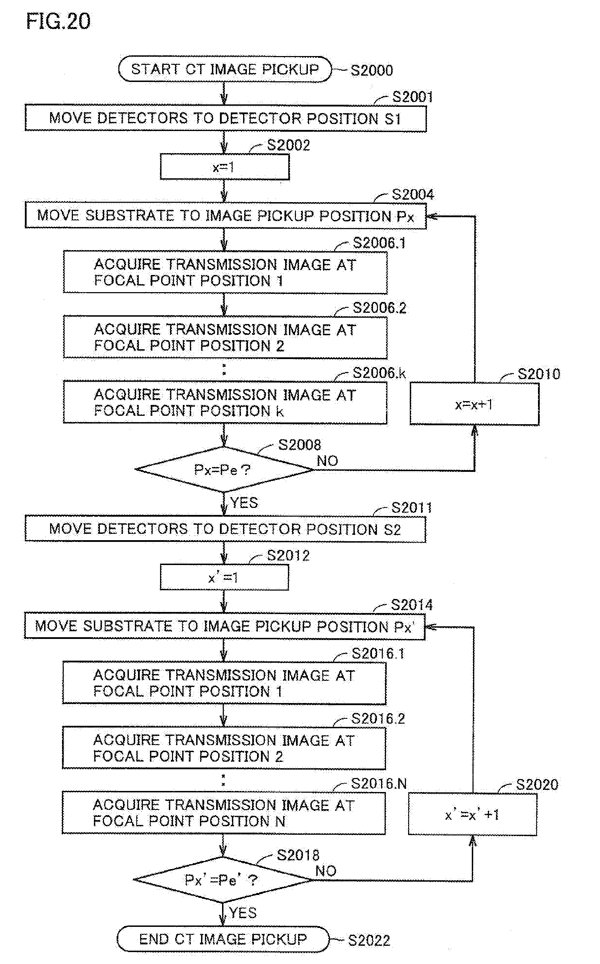

The general flow of the X-ray inspection method according to the second embodiment is similar to that of the first embodiment, which will not be repeated here. However, the CT image pickup process differs from that of the first embodiment. The CT image pickup according to the second embodiment will now be described in detail with reference to Fig. 20. Fig. 20 is a flowchart of the CT image pickup process according to the second embodiment.

Referring to Fig. 20, first, when the CT image pickup process is started (step S2000), operation unit 70 moves X-ray detectors 23.1 and 23.2 to detector position S1 at step S2001.

At step S2002, a parameter for image pickup position Px in the case of image pickup at detector position S1 is initialized (set x=1).

At step S2004, operation unit 70 moves inspection object 1 to position Px for moving the inspection object area to be inspected to an appropriate position.

Thereafter, operation unit 70 sets X-ray focal point position 17 at the respective focal point positions (F1 to Fk) to emit X-rays, and acquires transmission images at detector position S1 (step S2006.1 to step S2006.k). Operation unit 70 acquires partial images corresponding to the respective partial areas in these processes. Operation unit 70 also transfers the partial images to memory 90, for example, for the reconstruction process by reconstruction unit 76.

Then, operation unit 70 determines whether or not Px=Pe holds (step S2008). For example, operation unit 70 performs this determination based on whether the number of movements of the substrate has reached a predetermined number. Alternatively, operation unit 70 may perform this determination based on a measurement result of substrate position by a position sensor.

When Px=Pe does not hold (NO at step S2008), operation unit 70 sets x=x+1 at step S2010, and then repeats the process from steps S2004.

When Px=Pe holds (YES at step S2008), operation unit 70 moves X-ray detectors 23.1 and 23.2 to detector position S2 at step S2011.

At step S2012, a parameter for an images pickup position Px¹ in the case of image pickup at detector position S2 is initialized (set x¹=1).

At step S2014, operation unit 70 moves inspection object 1 to position Px' for moving the inspection object area to be inspected to an appropriate position.

Thereafter, Operation unit 70 sets X-ray focal point position 17 at the respective focal point positions (F1 to Fk) to emit X-rays, and acquires transmission images at detector position S2 (step S2016, 1 to step S2016.k) operation unit 70 acquires partial images corresponding to the respective partial areas in these processes. Operation unit 70 also transfers the partial images to memory 90, for example, for the reconstruction process by reconstruction unit 76.

Then, operation unit 70 determines whether or not Px'=Pe' holds (step S2018). For example, operation unit 70 performs this determination based on whether the number of movements of the substrate has reached a predetermined number. Alternatively, operation unit 70 may perform this determination based on a measurement result of substrate position by a position sensor.

When Px'=Pe' does not hold (NO at step S2018), operation unit 70 sets x'=x'+1 at step S2020, and then repeats the process from step S2014.

When Px=Pe hods (YES at step S2018), operation unit 70 ends the CT image pickup process (step S2022).

### (Others)

Although the above description addresses the example of moving the detector position once, X-ray inspection apparatus 200 may move the detector position twice or more times for image pickup, depending on the detector size in the Y direction and the required number of picked up images.

### [Third Embodiment]

As the third embodiment, an X-ray detection apparatus including a scanning X-ray source that scans X-rays on two lines will now be described. It is noted that the X-ray detection apparatus according to the third embodiment shall have a structure similar to that of the second embodiment except for X-ray source 10. Therefore, description of the structure thereof will not be repeated.

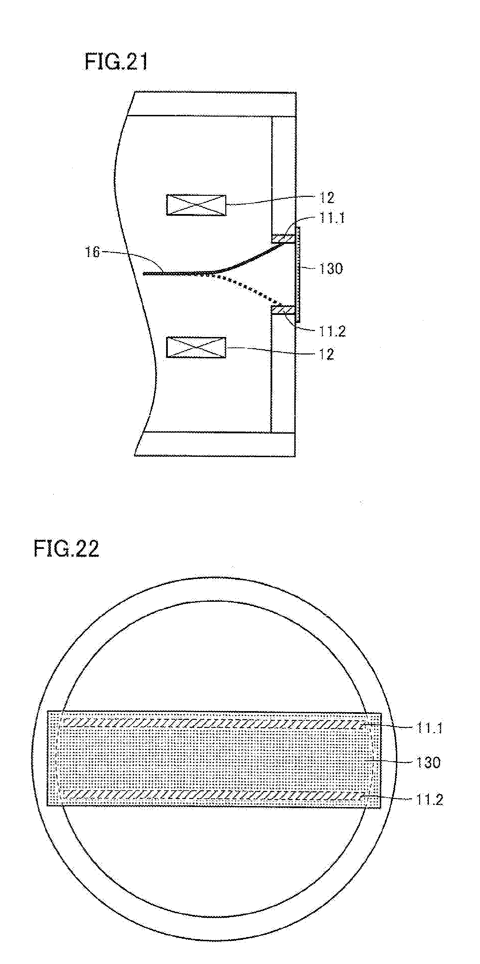

The structure of X-ray source 10 according to the third embodiment will be described with reference to Figs. 21 and 22. Fig. 21 is a cross-sectional view of X-ray source 10 according to the third embodiment. Fig. 22 is a top view of X-ray source 10 according to the third embodiment.

This X-ray source 10 differs from that of the first embodiment in including two linear targets 11.1 and 11.2 opposed to each other. Since the remaining main structure is similar to that of the first embodiment, the description thereof will not be repeated.

Referring to Fig. 21, targets 11.1 and 11.2 are reflective targets arranged such that X-ray 18 traveling in the direction in which electron beam 16 is rejected may be output to the outside. That is, X-ray source 10 is a reflective X-ray source. By using reflective targets as targets, X-ray source 10 can output X-rays of higher intensity than a transmissive X-ray source. This contributes to reduction of image pickup time and increase in image quality.

Referring to Fig. 22, a vacuum window 130 of X-ray source 10 is arranged so as to cover targets 11.1 and 11.2 Vacuum window 130 is made of a material that transmits X-rays, such as beryllium. It is noted that the shape of vacuum window 130 is not limited to that shown in Fig. 22, but only needs to be disposed within a range in which X-rays necessary for CT image pickup travel.

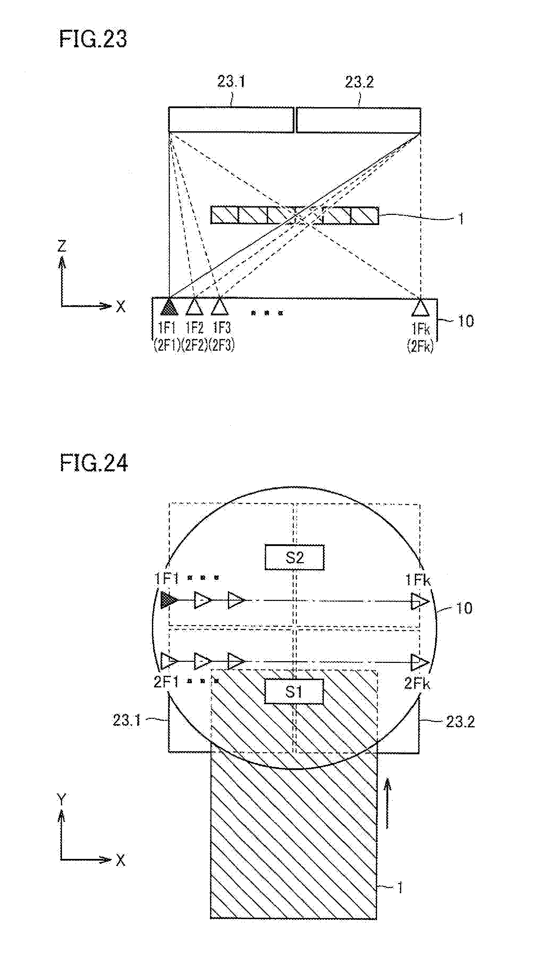

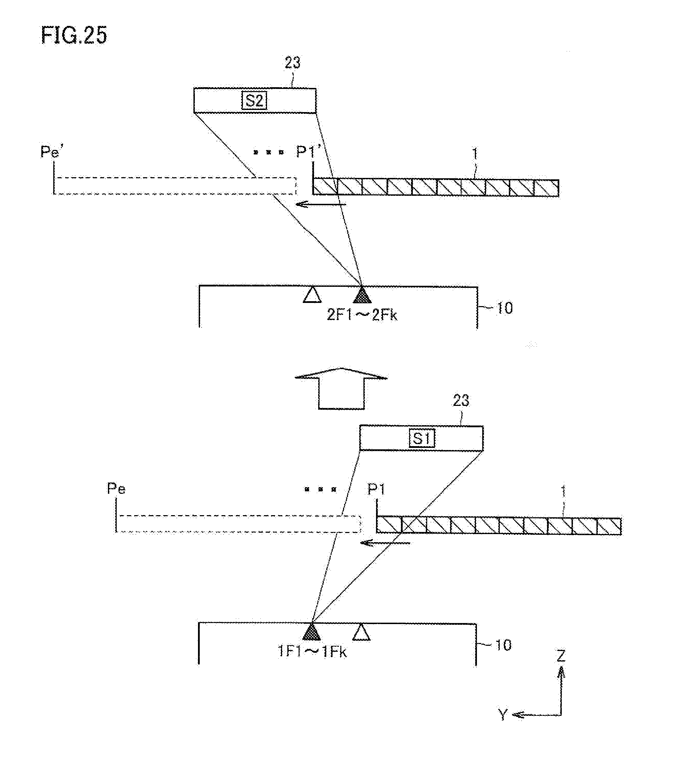

Figs. 23 to 25 show positional relation among X-ray detectors 23.1, 23.2, inspection object 1, and X-ray focal point position 17. Fig. 23 is a front view of X-ray detectors 23.1, 23.2, inspection object 1, and X-ray focal point position 17 as seen from the Y direction. Fig. 24 is a top view of X-ray detectors 23.1, 23.2, inspection object 1, and X-ray focal point position 17 as seen from the Z direction. Fig. 25 is a side view of X-ray detectors 23.1, 23.2, inspection object 1, and X-ray focal point position 17 as seen from the X direction.

Referring to Fig. 23, X-ray detectors 23.1 and 23.2 are in close contact with each other, similarly to the second embodiment. Their total width in the X direction shall be sized such that transmission images can be acquired at required angles for the opposite ends of an inspection object area in the X direction, It is noted that the whole surface of inspection object 1 herein shall be an inspection object area. For oblique CT, the sum of the widths of X-ray detectors 23.1 and 23.2 in the X directions needs to be longer than the length of inspection object 1 in the X direction.

X-ray source 10 successively emits X-rays in the Z directions at a plurality or focal point positions different one another on a line in the X directions. X-ray detectors 23.1 and 23.2 acquire transmission images per irradiation at detector position S1 shown in Fig. 24. At this stage, X-ray source 10 emits X-rays at X-ray focal point positions 1F1 to 1Fk.

When image pickup at detector position S1 is completed, the X-ray inspection apparatus moves X-ray detectors 23.1 and 23.2 to detector position S2. X-ray detectors 23.1 and 23.2 acquire transmission images of X-rays from focal point positions 2F2 to 2Fk.

Specifically, Referring to the lower diagram of Fig. 25, the X-ray inspection apparatus performs X-ray emission and image pickup at each of focal point positions 1F1 to 1Fk, and then moves inspection object 1 in the Y direction from position P1 to P2 to perform emission and image pickup at 1F1 to 1Fk. X-ray inspection apparatus 200 similarly repeats X-ray emission and movement of inspection object 1. When irradiation of inspection object 1 and image pickup end at position Pe in Fig. 25, CT image pickup at detector position S1 ends.

Then, X-ray inspection apparatus 200 moves the detector position to S2 and the substrate position to P1', as shown in the upper diagram of Fig. 25. X-ray inspection apparatus 200 repeats emission at 2F1 to 2Fk and movement of the inspection object in the Y direction until image pickup of the last row in the Y direction of the inspection object ends at Pe'.

As described above, in the third embodiment, the basic method of irradiation and image pickup is similar to that of the second embodiment, however, X-ray focal points 1F1 to 1Fk are used when the detectors are at position S1, and X-ray focal points 2F1 to 2Fk are used when the detectors are at position S2.

### (Flow of Process)

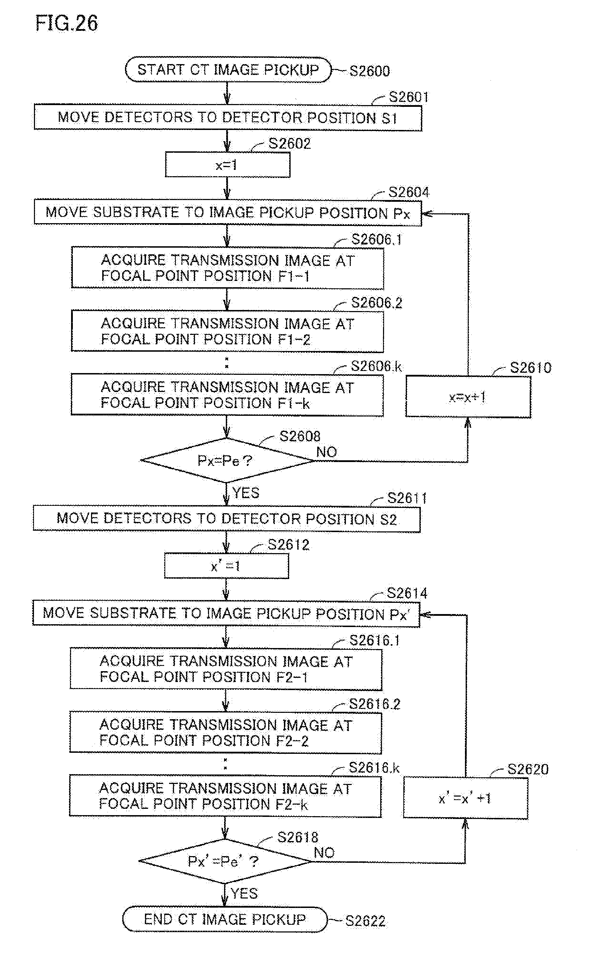

The general flow of the X-ray inspection method according to the third embodiment is similar to that of the first or second embodiment, which will not be repeated. However, the CT image pickup process differs from that of the first and second embodiments. The CT image pickup according to the third embodiment will now be described in detail with reference to Fig. 26. Fig. 26 is a flowchart of the CT image pickup process according to the third embodiment.

Referring to Fig. 26, first, when the CT image pickup process is started (step S2600), operation unit 70 moves X-ray detectors 23.1 and 23.2 to detector position S1 at step S2601.

At step S2602, a parameter for image pickup position Px in the case of image pickup at detector position S1 is initialized (set x=1).

At step S2604, operation unit 70 moves inspection object 1 to position Px for moving the inspection object area to be inspected to an appropriate position.

Thereafter, operation unit 70 sets X-ray focal point position 17 at focal point positions 1F1 to Fk to emit X-rays, and acquires transmission images at detector position S1 (step S2606.1 to step S2606k). Operation unit 70 acquires partial images corresponding to the respective partial areas in these processes. Operation unit 70 also transfers the partial images to memory 90, for example, for the reconstruction process by reconstruction unit 76.

Then, operation unit 70 determines whether or not Px=Pe holds (step S2608). For example, operation unit 70 performs this determination based on whether the number or movements of the substrate has reached a predetermined number. Alternatively, operation unit 70 may perform this determination based on a measurement result of substrate position by a position sensor.

When Px=Pe does not hold (NO at step S2608), operation unit 70 sets x=x+1 at step S2610, and then repeats the process from steps S2604.

When Px=Pe holds (YES at step S2608), operation unit 70 moves X-ray detectors 23.1 and 23.2 to detector position S2 at step S2611.

At step S2612, a. parameter for image pickup position Px' in the case of image pickup at detector position S2 is initialized (set x'=1).

At step S2614, operation unit 70 moves inspection object 1 to position Px' for moving the inspection object area to be inspected to an appropriate position.

Thereafter operation unit 70 sets X-ray focal point position 17 at focal point positions 2F1 to 2Fk to emit X-rays, and acquires transmission images at detector position S2 (step S2616.1 to step S2616.k). Operation unit 70 acquires partial images corresponding to the respective partial areas in these processes. Operation unit 70 also transfers the partial images to memory 90, for example, for the reconstruction process by reconstruction unit 76.

Then, operation unit 70 determines whether or not Px'=Pe' holds (step S2618). For example, operation unit 70 performs this determination based on whether the number of movements of the substrate has reached a predetermined number. Alternatively, operation unit 70 may perform this determination based on a measurement result of substrate position by a position sensor.

When Px'=Pe' does not hold (NO at step S2618), operation unit 70 sets x'=x'+1 at step S2620, and then repeats the process from step S2614,

When Px=Pe holds (YES at step S2618), operation unit 70 ends the CT image pickup process (step S2622),

### [Fourth Embodiment]

Driving of the X-ray detectors can be omitted by devising arrangement of X-ray detectors 23.1 and 23.2 in the third embodiment. An X-ray inspection apparatus in which the X-ray detectors are arranged in this manner will be described as the fourth embodiment.

The X-ray detection apparatus according to the fourth embodiment shall have a structure substantially similar to that of the third embodiment. Therefore, description of the structure thereof will not be repeated. However, the fourth embodiment differs from the third embodiment in that X-ray detectors 23.1 and 23.2 are arranged differently, and that X-ray detector drive unit 22 and detector driving control unit 32 are not provided.

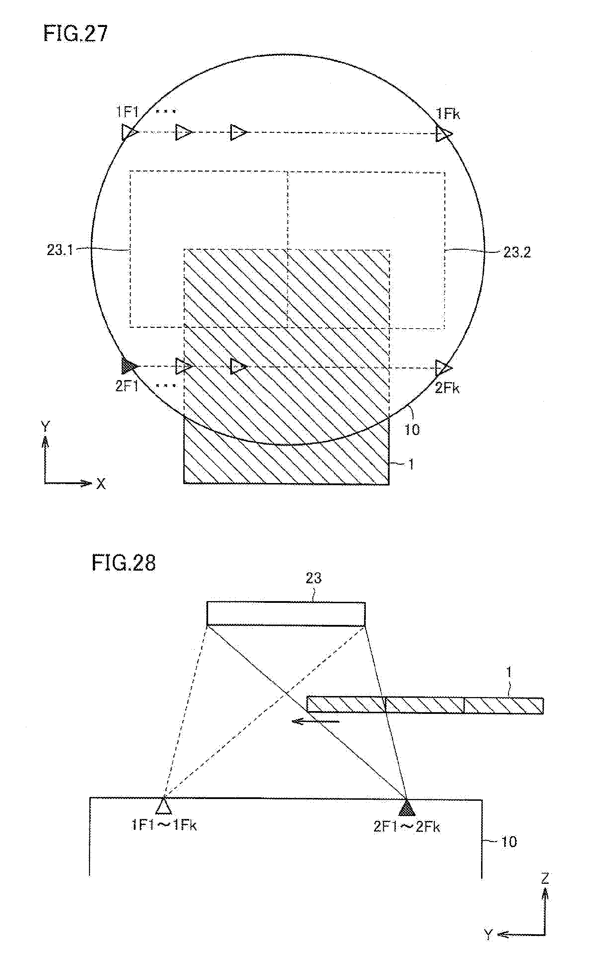

Referring to Figs. 27 and 28, positional relation between X-ray detectors 23.1, 23.2 and X-ray focal point positions in the fourth embodiment will be described. Fig. 27 illustrates a position of X-ray detectors 23.1 and 23.2 in the X-Y plane. Fig. 28 illustrates a position of X-ray detectors 23.1 and 23.2 in the Y-Z plane,

Referring to Fig. 27, X-ray detectors 23.1 and 23.2 are arranged so as to be interposed between two lines of X-ray scanning in the Y direction. It is noted that the relation between the total width of X-ray detectors 23.1 and 23.2 in the X direction and the width of the inspection object in the X direction is similar to that of the second or third embodiment.

Referring to Fig. 28, positional relation among X-ray detectors 23.1 and 23.2 (hereinafter collectively referred to as X-ray detector 23 as well), inspection object 1, and X-ray source 10 in the Y-Z plane is similar to that of the third embodiment.

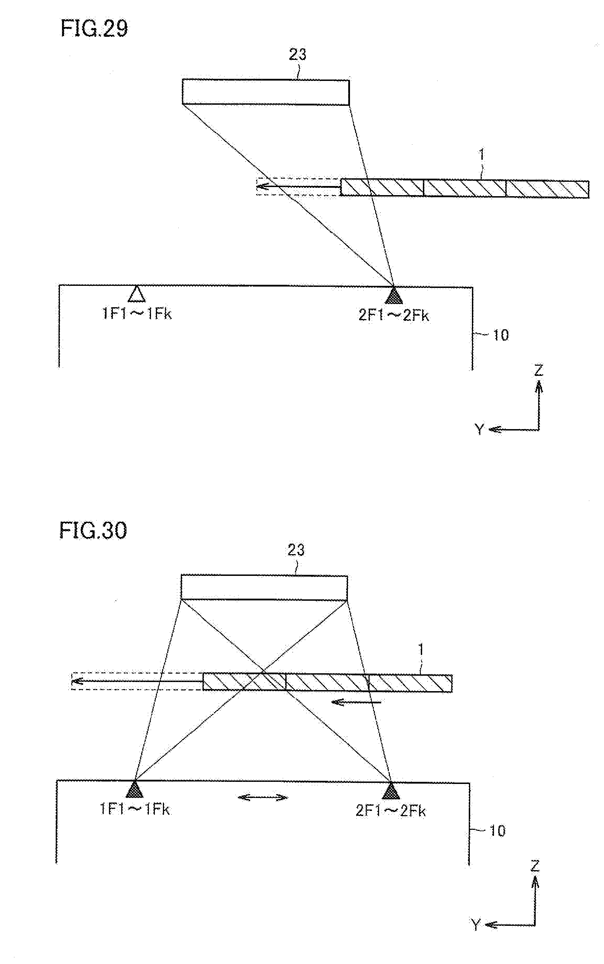

The X-ray inspection technique according to the present embodiment is basically similar to that of the third embodiment. However, the present inspection technique differs from that of the third embodiment in the order of emitting X-rays at focal point positions 1F1 to 1Fk and focal point positions 2F1 to 2Fk. The X-ray inspection technique according to the present embodiment will be described with reference to Figs. 29 to 31. Figs. 29 to 31 each illustrate an X-ray inspection technique according to the fourth embodiment.

In Fig. 29, inspection object 1 is in a section in which image pickup is enabled only at focal point positions 2F1 to 2Fk (hereinafter referred to as F2 series). At this time, the X-ray source does not output X-rays at focal point positions 1F1 to 1Fk (hereinafter referred to as F1 series).

In Fig. 30, inspection object 1 is moved in the Y direction relative to the state shown in Fig. 29, and image pickup is enabled both at the F1 series and the F2 series. At this time, X-ray detector 23 picks up a prescribed number of images at the focal point positions of the F1 series and the F2 series, and then moves inspection object 1.

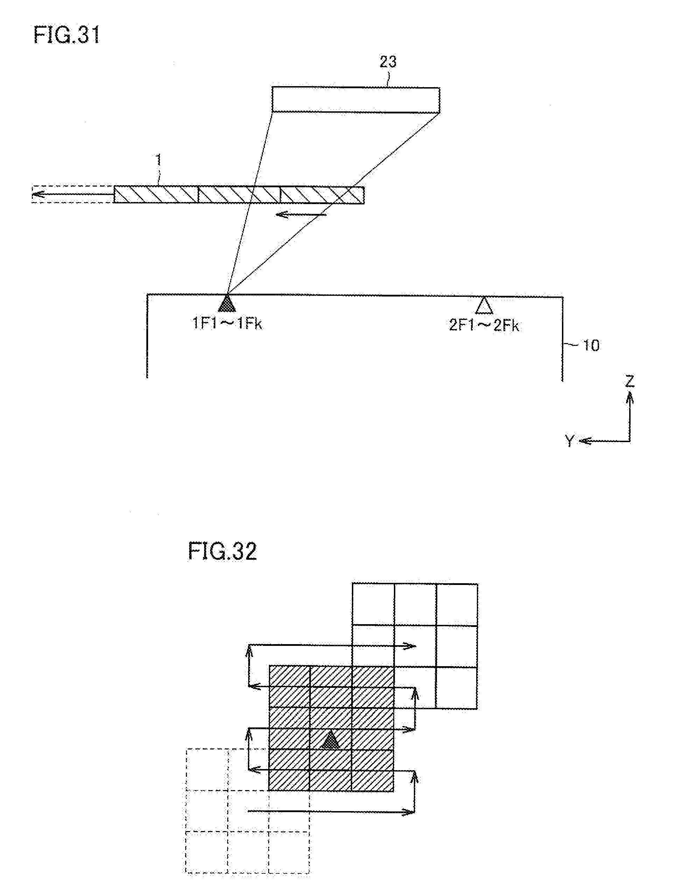

In Fig. 31, the inspection object is moved in the Y direction relative to the state shown in Fig. 30, and image pickup is enabled only at the F1 series. At this time, the focal point positions of the F1 series are not used for X-ray emission.

As understood from the above description, by picking up images with this geometry, detector driving is unnecessary, and inspection object 1 only needs to be moved in one direction (return operation is unnecessary),

### [Others]

As a matter of course, a suitable combination of the above-described respective embodiments also falls within the scope of the present invention. For example, in the third and fourth embodiments, a large single X-ray detector may also be used instead of a plurality of X-ray detectors as in the first embodiment.

It should be understood that the embodiments disclosed herein are illustrative and non-restrictive in every respect. The scope of the present invention is defined by the terms of the claims, rather than the description above, and is intended to include any medications within the scope and meaning equivalent to the terms of the claims.

### DESCRIPTION OF THE REFERENCE SIGNS

1 inspection object; 2 partial area; 9 vacuum vessel; 10 X-ray source; 11 target; 12 deflection yoke; 13 electron beam convergence coil; 14 high-voltage power supply; 15 vacuum pump; 16 electron beam; 17 X-ray focal point position; 18 X-ray; 19 electron gun; 20 inspection object drive mechanism, 22 X-ray detector drive unit; 23 X-ray detector; 25a rail; 25b rail; 30 image acquisition control mechanism; 32 detector driving control unit; 34 image data acquisition unit; 40 input unit; 50 output unit; 60 X-ray source control mechanism; 62 electron beam control unit; 70 operation unit; 72 X-ray source control unit; 74 image acquisition control unit; 76 reconstruction unit; 78 acceptance/rejection determination unit; 80 inspection object position control unit; 82 X-ray focal point position calculation unit; 84 image pickup condition setting unit; 90 memory, 92 X-ray focal point position information; 94 image pickup condition information; 96 program; 98 image data; 100 X-ray inspection apparatus; 130 vacuum window; 200 X-ray inspection apparatus.

## Claims

1. An X-ray inspection method for detecting X-rays output from an X-ray source (10) and transmitted through an inspection object area of an object (1) by an X-ray detection unit, to reconstruct three-dimensional data of said inspection object area from images indicated by the X-rays as detected, comprising the steps of:
acquiring a partial image for each of a plurality of partial areas obtained by dividing said inspection object area in a first direction based on a result of detection of the X-rays output from an X-ray focal point position (17) by said X-ray source and transmitted through said plurality of partial areas, respectively (S1506);
repeating said step of acquiring said partial image while scanning the X-ray focal point position of said X-ray source in said first direction (S1504, S1508, S1510); and
reconstructing said three-dimensional data from the partial image at each of a plurality of said X-ray focal point positions acquired by scanning of said X-ray focal point position (S1410),

2. The X-ray inspection method according to claim wherein
said inspection object area is divided into a plurality of said partial areas in said first direction and in a second direction extending across said first direction, and
said step of repeating includes the step of repeating said step of acquiring said partial image while moving said object in said second direction after scanning the X-ray focal point position of said X-ray source in said first direction, and scanning the X-ray focal point position of said X-ray source in said first direction starting from a state in which said object has been moved in said second direction.

3. The X-ray inspection method according to claim 1, wherein in said step of repeating, said X-ray focal point position is scanned on a plurality of lines.

4. The X-ray inspection method according to claim 3, wherein
said X-ray source includes a plurality of targets arranged on said plurality or lines, respectively, and
in said step of repeating, said X-ray focal point position is scanned on each of said targets,

5. The X-ray inspection method according to claim 4, wherein said X-ray detection unit is arranged to be interposed between two of said targets in a direction extending across said linens,

6. The X-ray inspection method according to claim 4, wherein each of said targets is a reflective target.

7. An X-ray inspection apparatus (100) for reconstructing three-dimensional data of an inspection object area of an object (1), comprising:
an X-ray source (10) for outputting X-rays,
an X-ray detection unit (23) for detecting said X-rays and outputting images indicated by the X-rays as detected; and
a control unit (70) for controlling operation of said X-ray inspection apparatus, wherein
said control unit includes
an image acquisition unit (74) for acquiring a partial image for each of a plurality of partial areas obtained by dividing said inspection object area in a first direction from a result of detection of X-rays output from an X-ray focal point position (17) of said X-ray source and transmitted through said plurality of partial areas, respectively,
an X-ray source control unit (72) for causing said X-ray source to scan said X-ray focal point position in said first direction, and
a reconstruction unit (76) for, along with scanning of said X-ray focal point position by said X-ray source control unit, reconstructing said three-dimensional data from said partial image acquired by said image acquisition unit at each of a plurality of said X-ray focal point positions.

## Amended claims

### Amended claims under Art. 19.1 PCT

1. (Amended) An X-ray inspection method for detecting X-rays output from an X-ray source (10) and transmitted through an inspection object area of an object (1) by an X-ray detection unit, to reconstruct three-dimensional data of said inspection object area from images indicated by the X-rays as detected, comprising the steps of
acquiring a partial image for each of a plurality of partial areas obtained by dividing said inspection object area in a first direction by the number corresponding to the number of images necessary for reconstruction of said three-dimensional data based on a result of detection of the X-rays output from an X-ray focal point position (17) by said X-ray source and transmitted through said plurality of partial areas, respectively (S1506);
repeating said step of acquiring said partial image while scanning the X-ray focal point position of said X-ray source in said first direction by a length in said first direction of each of said partial areas (S1504, S1508, S1510); and
reconstructing said three-dimensional data from the partial image at each of a plurality of said X-ray focal point positions acquired by scanning of said X-ray focal, point position (S1410).

2. (Amended) The X-ray inspection method according to claim 1, wherein said inspection object area is divided into a plurality of said partial areas in said first direction and in a second direction perpendicular to said first direction, and
said step of repeating includes the step of repeating said step of acquiring said partial image while moving said object in said second direction by a length in said_ second direction of each of said partial areas after scanning the X-ray focal point position of said X-ray source in said first direction, and scanning the X-ray focal point position of said X-ray source in said first direction starting from a state in which said object has been moved in said second direction.

3. (Amended) The X-ray inspection method according to claim 1, wherein in said step of repeating, said X-ray focal point position is scanned on a plurality of lines arranged in parallel along said first direction.

4. (Amended) The X-ray inspection method according to claim 3, wherein said X-ray source includes a plurality of targets arranged on and associated with said plurality of lines, respectively, and
in said step of repeating, said X-ray focal point position is scanned by irradiating a destination position on any of said plurality of targets with an electron beam.

5. (Amended) The X-ray inspection method according to claim 4, wherein said X-ray detection unit is arranged to be interposed between two of said targets in a second direction perpendicular to said first direction.

6. The X-ray inspection method according to claim 4, wherein each of said targets is a reflective target,

7. (Amended) An X-ray inspection apparatus (100) for reconstructing three-dimensional data of an inspection, object area of an object (1), comprising:
an X-ray source (10) for outputting X-rays,
an X-ray detection unit, (23) for detecting said X-rays and outputting images indicated by the X-rays as detected, and
a control unit (70) for controlling operation of said X-ray inspection apparatus, wherein
said control unit includes
an image acquisition unit (74) for acquiring a partial image for each of a plurality of partial areas obtained by dividing said inspection object area in a first direction by the number corresponding to the number of images necessary for reconstruction of said three-dimensional data from a result of detection of X-rays output from an X-ray focal point position (17) of said X-ray source and transmitted through said plurality of partial areas, respectively,
an X-ray source control unit (72) for causing said X-ray source to scan said X-ray focal point position in said first direction while scanning by a length in said first direction of each of said partial areas, and
a reconstruction unit (76) for, along with scanning of said X-ray focal point position by said X-ray source control unit, reconstructing said three-dimensional data from said partial image acquired by said image acquisition unit at each of a plurality of said X-ray focal point positions.

Statement under Art. 19.1 PCT
1. , Amendment
(1) Claims 1 to 5 and 7 have been amended to include the features for clarifying the details of the invention of the present application.

2. . Explanation
(1) The features newly incorporated into claims 1 and 7 are based on the disclosure in paragraphs [0051] to [0063] of the original specification, Figs. 4 and 6, and the like, Specifically, the Applicant of the present application has clarified that "a plurality of partial areas" are obtained by "dividing an inspection object area in the first direction by the number corresponding to the number of images necessary for reconstruction of the three-dimensional data." The Applicant of the present application has also clarified that "the X-ray focal point position of said X-ray source" is "scanned by a length in the first direction of each of the partial areas."
   These amendments have made more apparent that the X-ray inspection method recited in claim 1 and the X-ray inspection apparatus recited in claim 7 have novelty and inventive step over any cited reference.
(2) The features newly incorporated into claim 2 are based on the disclosure in paragraphs [0051] to [0063] of the original specification, Fig. 7, and the like. Specifically, the Applicant of the present application has clarified that "a second direction" is "perpendicular to the first direction." The Applicant of the present application has also clarified that "said object" is moved "in said second direction by a length in the second direction of each of the partial areas."
   These amendments have made more apparent that the X-ray inspection method recited in claim 2 has novelty and inventive step over any cited reference.
(3) The features newly incorporated into claims 3 to 5 are based on the disclosure in paragraphs [0125] to [0150] of the original specification, Figs, 21 to 26, and the like. These amendments have made more apparent that the X-ray inspection method recited in claims 3 to 5 has novelty and inventive step over any cited reference.
